# EUROPEAN PATENT APPLICATION

(11) **EP 1 553 478 A1**
(43) Date of publication of application: **13.07.2005**
(21) Application number: 04290016.7
(22) Date of filing: 06.01.2004
(51) Int. Cl.: G06F 1/10, G06F 11/16

(54) **A redundant synchronous clock distribution method, a related clock module and a related clock slave device**

(71) Applicant: ALCATEL, 75008 Paris (FR)
(72) Inventor: van den Berg, Eric, 2560 Nijlen (BE)
(74) Representative: Narmon, Gisèle Marie Thérèse

(57) **Abstract**

The present invention relates to a Redundant synchronous Clock distribution method, a related clock module and a related clock slave module in a Redundant synchronous Clock distribution system. The Redundant synchronous Clock distribution system comprises two clock modules, whereof one operates as a master, and one operates as a slave both for synchronising a plurality of clock slave modules. The method first performs the steps of at occurrence of a failure in a clock module, detecting the failure by one clock module of the two clock modules. Subsequently, the clock slave modules are notified of the failure at detection of the failure by the clock module having the failure. The clock slave modules, upon notifying the plurality of clock slave modules of the failure, selecting a common clock module not having this failure.

## Description

The present invention relates to a redundant synchronous clock distribution method as described in the preamble of claim 1, the related clock module as described in the preamble of claim 4 and the related clock slave module as described in the claim 10.

A redundant synchronous clock distribution system typically comprises two clock boards, A and B. One operates as the master clock board while the other operates as a slave clock board. Each of the clock boards has a plurality of reference clock inputs, each provisioning both clock modules with a certain reference clock signal. Both clock boards further comprise an input selector module that is adapted to select a reference clock signal from the plurality of reference clock signals provisioned at the inputs of the clock boards. Under software control both boards select a similar clock reference so that they both derive the same clock signal for provisioning a clean clock-signal to a number of to be synchronised clock slave modules such as a microprocessor board or telecom boards like there are line termination boards, route servers or switch matrix boards. Each input selector module of the boards subsequently is coupled to a timing unit, such as a Sonet timing unit, for generating a "clean" clock signal by jitter and wander clean-up and for provisioning hitless switchover of the selected clock signal. Furthermore each of the clock boards comprises an output selector module for selecting the "clean" clock signal from either clock board A or clock board B. Both clock boards select one and the same of both "clean" clock signals for provisioning the clock signal to the to be clock slave modules. This is usually performed under software control. The clock board that selects it's own "clean" clock signal is called the master clock board, while the clock board that selects the "clean" clock signal from the other board is called the slave clock board.

Such a redundant synchronous clock distribution system may suffer from Bi-master/Bi-slave detection failure or other failures of the output selector module stage. In case of a Bi-master/Bi-slave detection failure both clock board select their own "clean" clock (Bi-master) or both clock boards select the partner's "clean" clock (Bi-slave). Such a failure in this 'last physical stage' the output selector stage may cause differential wander in the clock distribution system resulting in overall system failure.

Currently, a low Failure In Time rate is obtained, by using a low quantity of high Mean Time Between Failure MTBF components, to meet system requirements.

However at occurrence of such Bi-master/Bi-slave detection failure, or other failure in the output selector stage, one of both clock distribution branches may be pinched off. This pinch off may be executed under control of hardware, which is difficult to implement due to a huge number of parameters required to make a guaranteed correct decision. This pinch off alternatively may also be executed under control of software. This method however is disadvantageous because of the slower execution of the pinch off due to the software implementation, which may cause temporary reduced system performance. Furthermore, the risk exists that due to avalanche effects and/or the lack of full system information in the available time frame, the distribution which is left 'ON' will fail shortly after again causing full system break down.

An object of the present invention is to provide a redundant synchronous clock distribution method of the above known type, a related clock module and a related clock slave module but wherein a failure in an output selector stage is not detrimental to the system performance during clock failure.

According to the invention, this object is achieved by the redundant synchronous clock distribution method described in claim 1, the clock module as described in claim 4 and the clock slave module as described in claim 10.

Indeed, by notifying each of the clock slave modules of a failure at detection of the failure by the clock module having the failure, all of said clock slave modules, upon notification of the failure, select the same clock module to slave on, i.e. the clock module not having the failure.

In this way all clock slave modules select the clock from a single "clean" clock source, and differential wander between several clock slave modules is avoided.

A further characteristic feature of the present invention is described in claim 2 and claim 5.

The failure of an output selection module is a Bi-master/Bi-slave detection failure.

A further characteristic feature of the present invention is described in claim 3 and claim 6.

The failure is a failure in a phase locked loop module of an output selection module of said clock module.

Another characteristic feature of the present invention is described in claim 7 .

The notifying of the clock slave modules of a failure such as the Bi-master/Bi-slave failure at detection of the failure is performed by dropping one clock cycle of the clock signal at detection of a failure by said clock module having the failure.

A further characteristic feature of the present invention is described in claim 8.

The notifying of the clock slave modules of a failure such as a Bi-master/Bi-slave failure at detection of the failure is performed by applying a phase alteration on said active clock signal.

A further characteristic feature of the present invention is described in claim 9.

The notifying of the clock slave modules of a failure such as the Bi-master/Bi-slave failure at detection of the failure is performed by sending an error-signal over a separate signal line.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a redundant synchronous clock distribution system of the present invention.

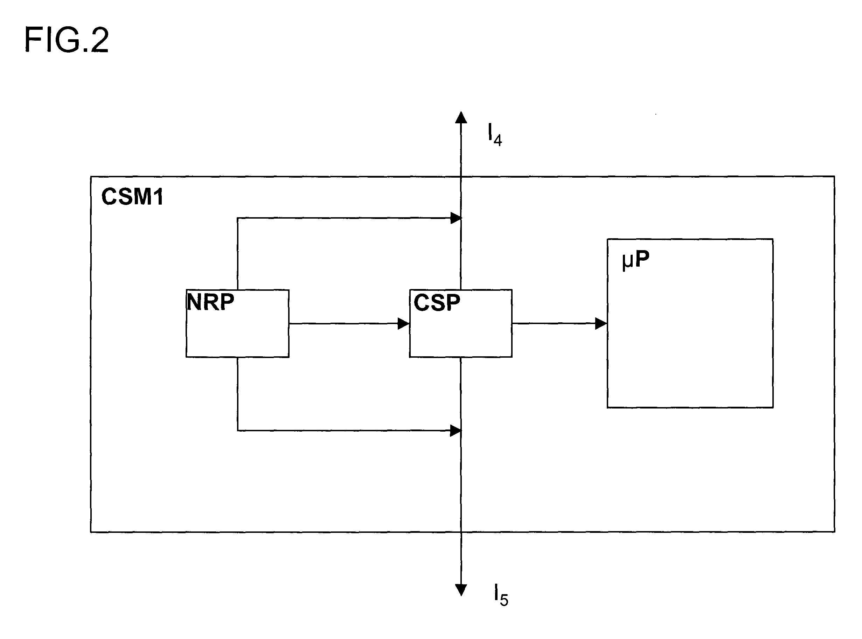

Fig. 2 represents a clock slave module of the redundant synchronous clock distribution system as presented in Fig. 1.

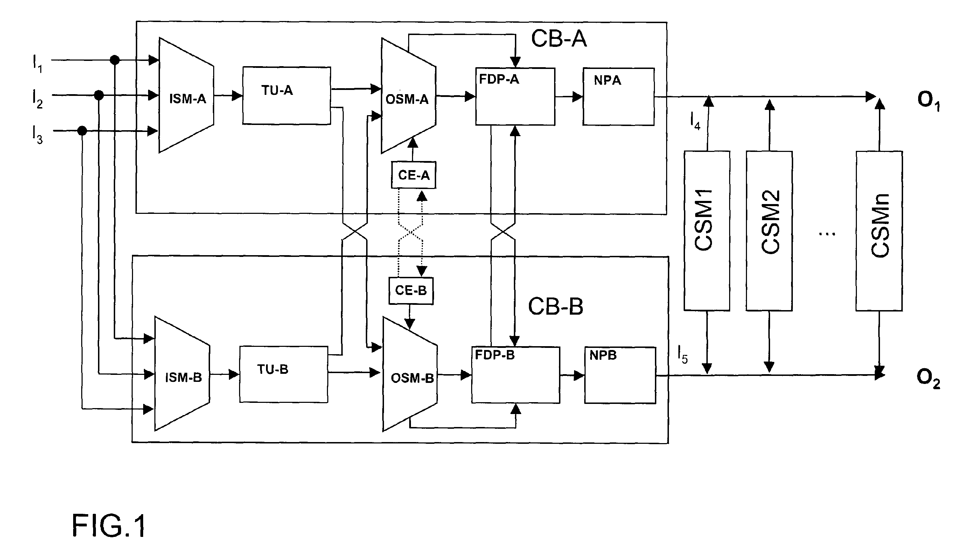

In the following paragraphs, referring to the drawings, an implementation of the redundant synchronous clock distribution system, the related clock boards and a related slave sub-module according to the present invention will be described. In the first paragraph of this description the main elements of the redundant synchronous clock distribution system as presented in FIG. 1 are described. In the second paragraph, all connections between the before mentioned elements and described means are defined. Subsequently all relevant functional means of the clock boards and the related slave modules mentioned are described followed by a description of all interconnections. In the succeeding paragraph the actual execution of the method for session establishment is described.

The main elements of the Redundant synchronous Clock distribution system, are two clock boards CB-A, CB-B, one acting as a master clock board CB-A for provisioning an active clock to the first clock distribution branch and one acting as a slave clock board CB-B for provisioning a standby clock to the second clock distribution branch, said first and second clock distribution branches being used for synchronising the clock slave modules CSM1..CSMn.

The clock Board CB-A, first comprises a input selection part ISM-A for selecting a clock reference from the plurality of reference clock signals provisioned at the inputs of the clock boards. The clock board further comprises a timing unit TU-A, such as a sonet timing unit, for generating a "clean" clock signal by jitter and wander clean-up and for provisioning hitless switchover of the selected clock signal. Furthermore the clock boards comprises an output selector module OSM-A for selecting the "clean" clock signal from either clock board CB-A or clock board CB-B. A control element, CE-A and CE-B, present of each of the clock boards, configures the output selector modules OSM-A and ASM-B in a way that both clock boards select one and the same of both "clean" clock signals for provisioning the clock signal to the to be clock slave modules CSM1..CSMn. The communication between both control elements is usually performed under software control but can be in hardware as well. The clock board that selects it's own "clean" clock signal is called the master clock board, while the clock board that selects the "clean" clock signal from the other board is called the slave clock board. The clock board additionally comprises a failure detection part DDP-A that is adapted to detect amongst others a Bi-master/Bi-slave failure of the output selection module OSM-A of the clock Board CB-A based on status information of the output selection module OSM-A and the clock board CB-A further comprises a notification part NP-A, NP-B that is adapted to notify the clock slave modules of a failure such as a Bi-master/Bi-slave failure in the output selection module OSM-A at detection of a failure by the clock board having a failure. Clock board CB-B has the same structure as clock board CB-A.

The clock slave module CSM1 comprises a notification reception part NRP that is able to receive a notification of a failure such as a Bi-master/Bi-slave failure and an active clock switching part CSP that is adapted to select a clock distribution branch not having said failure such as the Bi-master/Bi-slave failure, upon notification of the failure.

Clock slave module CSM2..CSMn have the same structure as clock slave module CSM1.

In order to explain the operation of the present invention it is assumed that the redundant synchronous clock distribution system typically comprises two clock boards, CB-A and CB-B. One operates as the master clock board while the other operates as a slave clock board. Each of the clock boards has a plurality of reference clock inputs, each provisioning both clock modules with a certain reference clock signal. The input selector module ISM-A, ISM-B of both clock boards selects a certain reference clock signal from the plurality of reference clock signals provisioned at the inputs of the clock boards. Under software control both boards select a similar clock reference so that they both derive the same clock signal for provisioning a clean clock-signal to a number of to be synchronised clock slave modules such as a microprocessor board or telecom boards like there are line termination boards, route servers or switch matrix boards. Then the timing unit TU-A, TU-B both generate a "clean" clock signal by jitter and wander clean-up of the clock signal provided by the input selector modules and for provisioning hitless switchover of the selected clock signal. Then, it is assumed that the output selector modules OSM-A, OSM-B both select the "clean" clock signal from clock board CB-A. This selection is performed under software control.

It is assumed that at a certain moment of time a Bi-master/Bi-slave failure occurs in the output selector module OSM-A of clock board CB-A. The status information indicates this a Bi-master/Bi-slave failure. The failure detection part FDP detects this Bi-master/Bi-slave failure of output selection module OSM-A based on the status information of said output selection module OSM-A. The notification part NP-A or NP-B notifies, at detection of a Bi-master/Bi-slave failure by said clock board having a Bi-master/Bi-slave failure, the clock slave modules of the Bi-master/Bi-slave failure. This notification of the Bi-master/Bi-slave failure here is performed by the notification part NP-A or NP-B that drops one clock cycle of the active clock signal. The notification reception part NRP receives the notification of the Bi-master/Bi-slave failure. It is here assumed that the notification reception part sees the dropped clock cycle as an identification of Bi-master/Bi-slave failure. The active clock switching part CSP selects a clock distribution branch for synchronising the clock slave module CSM1 not having the Bi-master/Bi-slave failure, upon notification of said Bi-master/Bi-slave failure, i.e. the dropped clock cycle. The microprocessor µP subsequently is synchronised using the active clock signal at the corresponding distribution branch which is branch O₂.

In some cases it will be clear which of both clock boards, CB-A or CB-B has a failure and as such is the cause of the Bi-master/Bi-slave condition. E.g. if the output selector module OSM-A is instructed by the control element CE-A, to select the "clean" clock signal from it's own timing unit, TU-A, but it's status signals indicate that it selects the "clean" clock signal from it's partner, TU-B, that it is clear that CB-A is the cause of the resulting Bi-slave condition. In this case it is clear that CB-A needs to notify the clock slave modules CSM1..CSMn *immediately* of a Bi-master/Bi-slave condition upon which these clock slave modules select the clock distributed on the clock branch originating from CB-B.

In other cases the bi-master/bi-slave can be a result from a failure within one of the control elements, CE-A or CE-B. In this case the output selector modules will select a "clean" clock source as instructed, and both failure detection parts FDP-A and FDP-B will detect a Bi-master/bi-slave at almost the same time. In said case of control element failure or other cases where the failure detection part can not identify the cause of the Bi-master/bi-slave condition, a predetermined amount of delay is to be used before sending a notification to the clock slave modules CSM1..CSMn. If during this predetermined delay time, it is observed by one clock board (e.g. CB-A) that the other clock board (e.g. CB-B) has send a Bi-master/bi-slave notification to the clock salve modules said clock board that detected this bi-master/bi-slave notification send by the other clock board will not send a bi-master/bi-slave notification itself. It is clear that said predetermined delay time is different from both clock boards. The longest predetermined delay shall in any case be less than the maximum time duration allowed for a bi-master/bi-slave condition. Said maximum time duration allowed for a bi-master/bi-slave condition can easily be calculated from the known system requirements and responses from the different modules involved.

The bi-master/bi-slave notification can also be used to inform the clock slave modules of other critical failures in one of the output selector modules OSM-A or OSM-B. Said output selector modules typically contain a Phase Locked Loop (PLL) to assure hit-less switch over. Upon failure of the PLL, the clock signal coming out of the output selector module will not be an acceptable copy of the clock generated by the selected timing unit (TU-A or TU-B). In case of said failure within an output selector module, it is required that all clock slave modules CSM1..CSMn select the clock distributed by the other clock board. The notification part on the clock board with said failure will notify all clock slave modules to switch over to the clock branch of the other clock board. Even in the event of said failure inside an output selection module, it is better to just send a notification instead of pinching of the clock distribution, as it is better to distribute a poor clock than no clock at all in the event the other clock board is down or not present.

A final remark is that embodiments of the present invention are described above in terms of functional blocks. From the functional description of these blocks, given above it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

Another characteristic feature of the present invention is that the clock boards exchange information about the dropped clock pulse. Together with the aforementioned predetermined priority to drop a clock pulse on detection of a bi-master or bi-slave condition, said exchange on information about the dropped pulse avoids that both clock boards drop a pulse for the same failure. The exchange about the dropped pulse can be either directly in between the 'detection and signalling parts', or by having the clocks boards monitor each other's clock distribution branch....

## Claims

1. Redundant synchronous Clock distribution method in a Redundant synchronous Clock distribution system, said Redundant synchronous Clock distribution system comprising two clock modules (CB-A, CB-B), one operating as a master, and one operating as a slave for synchronising a plurality of clock slave modules (CSM1..CSMn), said method performing the steps of:
a. at occurrence of a failure in a output selection module of said clock module modules (CB-A, CB-B), detecting said failure by a clock module of said clock modules, **CHARACTERISED IN THAT** said method further comprises the steps of:
b. notifying said plurality of clock slave modules (CSM1..CSMn) of a said failure at detection of said failure by said clock module having said failure;
c. said plurality of clock slave modules (CSM1..CSMn), upon notifying said plurality of clock slave modules (CSM1..CSM) of said failure, selecting a common clock board not having said failure.

2. Redundant synchronous Clock distribution method according to claim 1, **CHARACTERISED IN THAT** said failure is a Bi-master/Bi-slave failure.

3. Redundant synchronous Clock distribution method according to claim 1, **CHARACTERISED IN THAT** said failure is a failure in a phase locked loop module of an output selection module of said clock module.

4. Clock module (CB-A, CB-B), for use in a Redundant synchronous Clock distribution system, said Redundant synchronous Clock distribution system comprising at two clock modules (CB-A, CB-B), one acting as a master clock module (CB-A) for provisioning a first clock distribution branch with an active clock signal and a clock module acting as a slave clock module (CB-B) for provisioning the second clock distribution branch with a standby clock signal, said first and second clock distribution branches being used for synchronising clock slave modules (CSMI..CSMn), said clock module (CB-A, CB-B) comprising the following parts:
a. a failure detection part (FDP-A, FDP-B) for detecting a failure of an output selection module (OSM-A, OSM-B) based on status information of said output selection module (OSM-A, OSM-B), **CHARACTERISED IN THAT** said clock module further comprises:
b. notification part (NP-A, NP-B) that is adapted to notify said clock slave modules of a said failure at detection of a failure by said clock module having said failure.

5. Clock module (CB-A, CB-B), according to claim 4, **CHARACTERISED IN THAT** said failure in said output module of said clock modules is a Bi-master/Bi-slave failure.

6. Clock module (CB-A, CB-B), according to claim 4, **CHARACTERISED IN THAT** said failure output module of said clock modules is a failure in a phase locked loop module of said output selection module (OSM-A, OSM-B)..

7. Clock board, according to any of claim 4 to claim 6, **CHARACTERISED IN THAT** said notification part (NP-A) is adapted to notify said clock slave modules (CSM1..CSMn) of said failure by dropping one clock cycle of said active clock signal.

8. Clock board, according to any of claim 4 to claim 6, **CHARACTERISED IN THAT** said notification part (NP-A, NP-B) is adapted to notify said clock slave modules (CSM1..CSMn) of said failure by applying a phase alteration on said active clock signal.

9. Clock board, according to any of claim 4 to claim 6, **CHARACTERISED IN THAT** said notification part (NP-A, NP-B) is adapted to notify said clock slave modules (CSM1..CSMn) of said failure by sending an error-signal over a separate signal line.

10. Clock slave module (CSM1..CSMn) for use in a Redundant synchronous Clock distribution system, said Redundant synchronous Clock distribution system comprising a master clock module (CB-A) for provisioning an active clock signal and at a slave clock module (CB-B) for provisioning a standby clock signal, said active and standby clock signal being used for synchronising said clock slave module (CSM1..CSMn), **CHARACTERISED IN THAT** said clock slave module further comprises:
a. notification reception part (NRP) adapted to receive a notification of said failure in an output selection module of said clock modules;
b. an active clock switching part (CSP), adapted to select a clock distribution branch, for synchronising said clock slave module (CSM1..CSMn), not having said failure, upon notification of said failure.
